# FASCICULE DE BREVET EUROPEEN

(11) **EP 0 752 337 B1**
(45) Date de publication et mention de la délivrance du brevet: **27.01.1999**
(21) Numéro de dépôt: 96401280.1
(22) Date de dépôt: 12.06.1996
(51) Int. Cl.: B60N 2/00

(54) **Siège pour véhicule automobile**
Kraftfahrzeugsitz
Motor vehicle seat

(30) Priorité: 05.07.1995 FR 9508127
(43) Date de publication de la demande: 08.01.1997
(73) Titulaire: CESA COMPAGNIE EUROPEENNE DE SIEGES POUR AUTOMOBILES, 92307 Levallois-Perret Cédex (FR)
(72) Inventeur: Anglade, Gérard, 45290 Nogent-sur-Vernisson (FR)
(74) Mandataire: Moncheny, Michel

(56) Documents cités:
- WO-A-93/04892
- DE-A- 3 510 275
- DE-A- 3 521 067
- DE-A- 4 206 651
- US-A- 4 157 173
- US-A- 4 660 887
- US-A- 4 664 444

## Description

La présente invention concerne un siège pour véhicule automobile.

On connaît déjà dans l'état de la technique, notamment d'après US-A-4 664 444, WO 93/04 892 ou DE-A-3 510 275, un siège pour véhicule automobile du type comprenant une assise comportant une armature portant une nappe de suspension recouverte par une matelassure, l'armature comprenant une extrémité avant et une extrémité arrière de liaison avec un dossier du siège.

La nappe de suspension comprend habituellement une structure en fils métalliques pliés ou non accrochée sur l'armature au moyen d'épingles, de ressorts de traction ou d'éléments de liaison analogues.

L'invention a pour but de proposer un siège pour véhicule automobile dont l'assise soit confortable, simple à fabriquer et d'un faible coût de revient.

A cet effet l'invention a pour objet un siège pour véhicule automobile du type précité, caractérisé en ce que la nappe de suspension comprend une série de tiges souples sensiblement longitudinales et parallèles entre elles comportant chacune une extrémité avant fixe et une extrémité arrière libre en porte-à-faux, si bien que la nappe de suspension est déformable élastiquement dans une direction verticale et dans une direction horizontale transversale.

Suivant des caractéristiques de différents modes de réalisation de l'invention :
- l'armature comprend une traverse avant d'assujettissement des extrémités avant fixes des tiges ;
- les extrémités avant des tiges sont fixées sur la traverse avant, notamment par des cavaliers ou par encastrement ;
- l'armature comprend une traverse d'appui des tiges disposée plus près des extrémités avant que des extrémités arrière de ces tiges;
- l'armature comprend un cadre tubulaire sensiblement rectangulaire et horizontal dont un côté délimite la traverse avant, la traverse d'appui étant fixée sur les côtés latéraux de ce cadre, les tiges s'étendant dans un espace intérieur délimité par le cadre ;
- les tiges sont reliées entre elles par une structure déformable ;
- la structure est déformable élastiquement transversalement aux tiges ;
- la structure déformable comprend un treillis ou une toile élastique emprisonnant les tiges ;
- la structure déformable comprend des anneaux élastiques enlaçant les tiges deux à deux, de manière à relier chaque tige à chacune de ses tiges immédiatement voisines ;
- la structure déformable comprend une mousse élastique en caoutchouc ou en polymère dans laquelle les tiges sont noyées ;
- les bords latéraux de la nappe de suspension sont reliés à l'armature ;
- la matelassure comprend une mousse élastique en caoutchouc ou en polymère recouvrant les tiges, ces tiges étant logées dans des évidements complémentaires ménagés dans une face de la mousse de recouvrement des tiges ;
- les tiges sont fabriquées dans un matériau choisi parmi les plastiques renforcés par des fibres de verre ou de carbone, l'acier à ressort et les alliages légers.

L'invention sera mieux comprise à la lecture de la description qui va suivre donnée uniquement à titre d'exemple et faite en se référant aux dessins annexés dans lesquels :
- la figure 1 est une vue schématique en élévation en coupe d'un siège pour véhicule automobile selon un premier mode de réalisation de l'invention ;
- la figure 2 est une vue de dessus de l'armature d'assise et de la nappe de suspension du siège de la figure 1 ;
- la figure 3 est une vue partielle similaire à la figure 2 d'une assise de siège selon un second mode de réalisation de l'invention ;
- la figure 4 est une vue en coupe transversale d'une nappe de suspension d'une assise de siège selon un troisième mode de réalisation de l'invention ;
- la figure 5 est une vue en coupe transversale d'une nappe de suspension d'une assise de siège selon un quatrième mode de réalisation de l'invention.

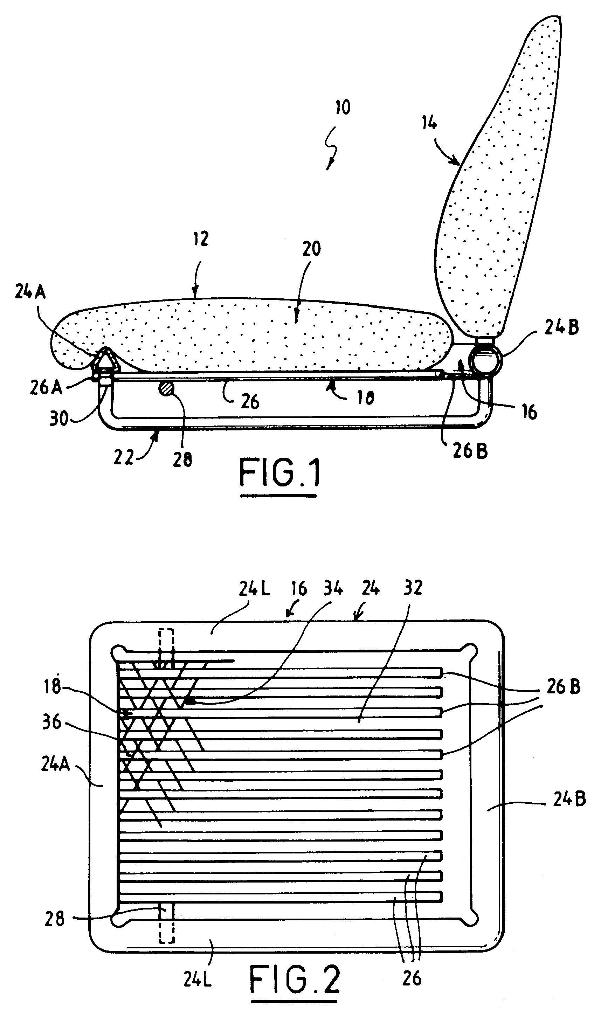

On a représenté sur la figure 1 un siège pour véhicule automobile, selon un premier mode de réalisation de l'invention, désigné par la référence générale 10.

De façon classique, le siège comporte une assise 12 et un dossier 14.

L'assise 12 comporte une armature 16 portant une nappe de suspension 18 recouverte par une matelassure 20.

L'assise 12 est destinée à être reliée à un plancher du véhicule par un piètement 22 s'étendant entre une extrémité avant de l'assise et une extrémité arrière de cette assise de liaison avec le dossier 14.

En se référant à la figure 2, on voit que l'armature 16 comprend un cadre tubulaire 24 sensiblement rectangulaire et horizontal.

Le cadre 24 comporte deux côtés transversaux avant 24A et arrière 24B reliés par deux côtés latéraux 24L. Le côté arrière 24B est relié de façon connue en soi au dossier 14.

La nappe de suspension 18 comporte une série de tiges souples 26 sensiblement longitudinales et parallèles entre elles. Chaque tige 26 comporte une extrémité avant fixe 26A et une extrémité arrière libre en porte-à-faux 26B.

L'armature 16 comporte une traverse 28 d'appui des tiges 26 fixée sur des côtés latéraux 24L du cadre tubulaire. Cette traverse 28 est disposée plus près des extrémités avant 26A que des extrémités arrière 26B des tiges.

Le côté avant du cadre tubulaire 24 délimite une traverse d'assujettissement des extrémités avant fixes 26A des tiges. De préférence, comme cela est représenté sur la figure 1, les extrémités avant fixes 26A des tiges sont fixées sur le côté avant 24A du cadre par des cavaliers 30. En variante, ces extrémités peuvent être encastrées dans le côté avant 24A ou bloquées par contact contre ce côté 24A.

Les tiges 26 sont espacées entre elles transversalement et s'étendent dans un espace intérieur 32 délimité par le cadre.

Les tiges 26 sont fabriquées de préférence dans un plastique renforcé par des fibres de verre ou de carbone. En variante, les tiges peuvent être fabriquées en acier à ressort ou encore en alliage léger. Dans ce dernier cas, les tiges sont avantageusement fabriquées par des procédés d'extrusion permettant d'obtenir des sections variées.

On voit également sur la figure 2 que les tiges 26 sont reliées entre elles par une structure 34 déformable élastiquement transversalement aux tiges. Dans l'exemple représenté sur cette figure, la structure déformable 34 comporte un treillis ou une toile élastique 36 emprisonnant les tiges 26.

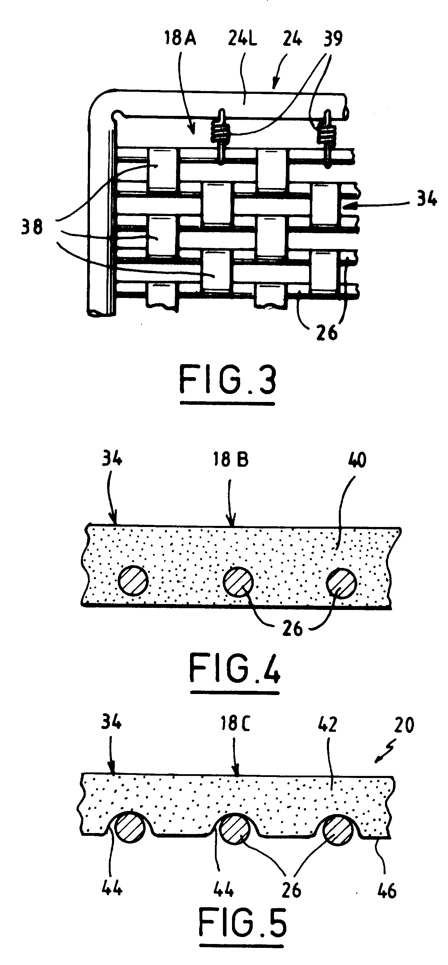

Sur la figure 3, on a représenté une nappe de suspension 18A d'une assise d'un siège pour véhicule automobile selon un second mode de réalisation de l'invention.

Dans ce cas, la structure déformable 34 comprend des anneaux élastiques 38, en caoutchouc ou en polymère, enlaçant les tiges 26 deux à deux de manière à relier chaque tige à chacune de ses tiges immédiatement voisines.

On a également représenté sur la figure 3 des ressorts de traction 39 reliant la nappe de suspension 18A aux côtés latéraux 24L du cadre 24 d'armature.

Sur la figure 4, on a représenté une nappe de suspension 18B d'une assise de siège pour véhicule automobile selon un troisième mode de réalisation de l'invention.

Dans ce cas, la structure déformable 34 comprend une mousse élastique 40 en caoutchouc ou en polymère dans laquelle les tiges 26 sont noyées. Cette mousse 40 forme par exemple une matelassure de l'assise 12.

La mousse 40 est fabriquée par exemple en polyuréthane.

Sur la figure 5, on a représenté une nappe de suspension 18C d'une assise de siège pour véhicule automobile selon un quatrième mode de réalisation de l'invention.

Dans ce cas, la matelassure 20 comprend une mousse élastique 42 en caoutchouc ou en polymère recouvrant les tiges 26. Ces tiges sont logées dans des évidements complémentaires 44 ménagés dans une face 46 de la mousse de recouvrement des tiges.

Dans ce qui précède, on a appelé "tige" un élément mince et allongé de section transversale quelconque, notamment circulaire ou rectangulaire.

L'invention ne se limite pas aux modes de réalisation décrits précédemment.

En particulier, les bords latéraux de la nappe de suspension peuvent être reliés à l'armature par des épingles, des ressorts, des anneaux élastiques ou des éléments de liaison analogues.

Les extrémités avant fixes des tiges 26 peuvent être encastrées dans l'armature par emmanchement dans des perçages ménagés dans une traverse avant tubulaire ou bien par sertissage sur une traverse avant en tôle.

L'invention comporte de nombreux avantages.

La nappe de suspension d'un siège selon l'invention est déformable élastiquement dans une direction verticale et dans une direction horizontale transversale. Elle permet ainsi d'obtenir une assise confortable bien qu'équipée d'une matelassure d'épaisseur relativement faible, les tiges de la nappe de suspension pouvant être, selon un mode particulier de réalisation, noyée dans la mousse de la matelassure.

Les déformations de la structure 34 de la nappe de suspension ont un effet d'amortissement par frottement.

Le siège selon l'invention comporte une assise simple à fabriquer et d'un prix de revient réduit. De plus, cette assise, d'un encombrement vertical réduit, est très confortable car elle enveloppe convenablement les hanches et les cuisses d'un occupant.

## Revendications

1. Siège pour véhicule automobile du type comprenant une assise (12) comportant une armature (16) portant une nappe de suspension (18) recouverte par une matelassure (20), l'armature comprenant une extrémité avant (24A) et une extrémité arrière (24B) de liaison avec un dossier (14) du siège, caractérisé en ce que la nappe de suspension (18) comprend une série de tiges souples (26) sensiblement longitudinales et parallèles entre elles comportant chacune une extrémité avant fixe (26A) et une extrémité arrière libre (26B) en porte-à-faux, si bien que la nappe de suspension est déformable élastiquement dans une direction verticale et dans une direction horizontale transversale.

2. Siège selon la revendication 1, caractérisé en ce que l'armature (16) comprend une traverse avant (24A) d'assujettissement des extrémités avant fixes (26A) des tiges.

3. Siège selon la revendication 2, caractérisé en ce que les extrémités avant (26A) des tiges sont fixées sur la traverse avant (24A), notamment par des cavaliers (30) ou par encastrement.

4. Siège selon l'une quelconque des revendications précédentes, caractérisé en ce que l'armature comprend une traverse (28) d'appui des tiges disposée plus près des extrémités avant (26A) que des extrémités arrière (26B) de ces tiges.

5. Siège selon les revendications 2 et 4 prises ensemble, caractérisé en ce que l'armature (16) comprend un cadre tubulaire (24) sensiblement rectangulaire et horizontal dont un côté délimite la traverse avant (24A), la traverse d'appui (28) étant fixée sur les côtés latéraux (24L) de ce cadre, les tiges (26) s'étendant dans un espace intérieur (32) délimité par le cadre (24).

6. Siège selon l'une quelconque des revendications précédentes, caractérisé en ce que les tiges (26) sont reliées entre elles par une structure (34) déformable.

7. Siège selon la revendication 6, caractérisé en ce que la structure est déformable élastiquement transversalement aux tiges (26).

8. Siège selon la revendication 6 ou 7, caractérisé en ce que la structure déformable (34) comprend un treillis ou une toile (36) emprisonnant les tiges (26).

9. Siège selon la revendication 6 ou 7, caractérisé en ce que la structure déformable (34) comprend des anneaux élastiques (38) enlaçant les tiges (26) deux à deux, de manière à relier chaque tige à chacune de ses tiges immédiatement voisines.

10. Siège selon la revendication 6 ou 7, caractérisé en ce que la structure déformable (34) comprend une mousse élastique (40) en caoutchouc ou en polymère dans laquelle les tiges (26) sont noyées.

11. Siège selon l'une quelconque des revendications précédentes, caractérisé en ce que les bords latéraux de la nappe de suspension (18) sont reliés à l'armature (1).

12. Siège selon l'une quelconque des revendications 1 à 6, caractérisé en ce que la matelassure (20) comprend une mousse élastique (42) en caoutchouc ou en polymère recouvrant les tiges (26), ces tiges étant logées dans des évidements complémentaires (44) ménagés dans une face (46) de la mousse de recouvrement des tiges.

13. Siège selon l'une quelconque des revendications précédentes, caractérisé en ce que les tiges (26) sont fabriquées dans un matériau choisi parmi les plastiques renforcés par des fibres de verre ou de carbone, l'acier à ressort et les alliages légers.

## Claims

1. Motor vehicle seat of the type comprising a base (12) including a reinforcement (16) carrying a suspension layer (18) covered by padding (20), the reinforcement including a front end (24A) and a rear end (24B) for connecting to a backrest (14) of the seat, **characterised in that** the suspension layer (18) includes a series of supple rods (26), substantially longitudinal and parallel with one another and each having a fixed front end (26A) and a rear end (26B) hanging free such that the suspension layer is elastically deformable in a vertical direction and in a transverse horizontal direction.

2. Seat according to claim 1, **characterised in that** the reinforcement (16) includes a front crosspiece for securing the fixed front ends (26A) of the rods.

3. Seat according to claim 2, **characterised in that** the front ends (26A) of the rods are fixed onto the front crosspiece (24A), particularly by staples (30) or by embedding.

4. Seat according to any one of the preceding claims, **characterised in that** the reinforcement includes a crosspiece (28) to support the rods which is disposed nearer the front ends (26A) than the rear ends (26B) of these rods.

5. Seat according to claims 2 and 4 taken together, **characterised in that** the reinforcement (16) includes a substantially rectangular and horizontal tubular frame (24), one side of which delimits the front crosspiece (24A), the support crosspiece (28) being fixed onto the lateral sides (24L) of this frame, the rods (26) extending in an interior space (32) delimited by the frame (24).

6. Seat according to any one of the preceding claims, **characterised in that** the rods (26) are connected to one another by a deformable structure (34).

7. Seat according to claim 6, **characterised in that** the structure is elastically deformable transversely to the rods (26).

8. Seat according to claim 6 or 7, **characterised in that** the deformable structure (34) comprises a canvas or a cloth (36) imprisoning the rods (26).

9. Seat according to claim 6 or 7, **characterised in that** the deformable structure (34) includes elastic rings (38) twining round the rods (26) two at a time, in such a way as to connect each rod to each of its immediately adjacent rods.

10. Seat according to claim 6 or 7, **characterised in that** the deformable structure (34) includes a resilient foam (40) made of rubber or polymer in which the rods (26) are embedded.

11. Seat according to any one of the preceding claims, **characterised in that** the side edges of the suspension layer (18) are connected to the reinforcement (1).

12. Seat according to any one of claims 1 to 6, **characterised in that** the padding (20) comprises a resilient foam (40) made of rubber or polymer covering the rods (26), these rods being accommodated in complementary depressions (44) arranged in one face (46) of the foam for covering the rods.

13. Seat according to any one of the preceding claims, **characterised in that** the rods (26) are manufactured in a layererial chosen from plastics reinforced with glass fibres or carbon fibres, spring steel and light alloys.

## Patentansprüche

1. Kraftfahrzeugsitz, aufweisend einen Sitzteil (12), welcher einen Beschlag 16) umfaßt, der eine Aufhängungsaufnahme (18) trägt, welche durch ein Polster (20) abgedeckt ist, wobei der Beschlag ein Vorderende (24A) und ein Hinterende (24B) zur Verbindung mit einer Rückenlehne (14) des Sitzes aufweist, dadurch gekennzeichnet, daß die Aufhängungsauflage (18) eine Reihe von nachgiebigen Stangen (26) umfaßt, die im wesentlichen in Längsrichtung sowie parallel zueinander verlaufen und jeweils ein feststehendes Vorderende (26A) und ein freies, freitragendes Hinterende (26B) aufweist, und daß die Aufhängungsauflage in einer vertikalen Richtung und einer horizontalen Querrichtung elastisch verformbar ist.

2. Sitz nach Anspruch 1, dadurch gekennzeichnet, daß der Beschlag (16) eine vordere Traverse (24A) zur Festlegung der feststehenden Vorderenden (26A) der Stangen umfaßt.

3. Sitz nach Anspruch 2, dadurch gekennzeichnet, daß die Vorderenden (26A) der Stangen auf der vorderen Traverse (24A) insbesondere durch Klammern (30) oder durch Einspannen befestigt sind.

4. Sitz nach einem der vorangehenden Ansprüche, dadurch gekennzeichnet, daß der Beschlag eine Anlagetraverse (28) für die Stangen aufweist, die näher zu den Vorderenden (26A) als den Hinterenden (26B) dieser Stangen angeordnet ist.

5. Sitz nach den Ansprüchen 2 und 4, zusammengenommen, dadurch gekennzeichnet, daß der Beschlag (16) einen Rohrrahmen (24) aufweist, der allgemein rechteckig ist und horizontal verläuft, und von welchem eine Seite die vordere Traverse (24A) begrenzt, wobei die Anlagetraverse (28) auf den lateralen Seiten (24L) dieses Rahmens befestigt ist, wobei die Stangen (26) sich in einem Innenraum (22) erstrecken, der durch den Rahmen (24) begrenzt ist.

6. Sitz nach einem der vorangehenden Ansprüche, dadurch gekennzeichnet, daß die Stangen (26) untereinander durch eine verformbare Struktur (34) verbunden sind.

7. Sitz nach Anspruch 6, dadurch gekennzeichnet, daß die Struktur quer zu den Stangen (26) elastisch verformbar ist.

8. Sitz nach Anspruch 6 oder 7, dadurch gekennzeichnet, daß die verformbare Struktur (34) ein Geflecht oder ein Gewebe (26) umfaßt, das die Stangen (26) einschließt.

9. Sitz nach Anspruch 6 oder 7, dadurch gekennzeichnet, daß die verformbare Struktur (34) elastische Ringe (26) umfaßt, welche die Stangen (26) paarweise derart einlaschen, daß jede Stange mit jeder ihrer unmittelbar benachbarten Stangen verbunden ist.

10. Sitz nach Anspruch 6 oder 7, dadurch gekennzeichnet, daß die verformbare Struktur (34) einen elastischen Schaumstoff (40) aus Kautschuk oder Polymer umfaßt, in welchem die Stangen (26) eingebettet sind.

11. Sitz nach einem der vorangehenden Ansprüche, dadurch gekennzeichnet, daß die Seitenränder der Aufhängungsauflage (18) mit dem Beschlag (1) verbunden sind.

12. Sitz nach einem der Ansprüche 1 bis 6, dadurch gekennzeichnet, daß das Polster (20) einen elastischen Schaumstoff (42) aus Kautschuk oder aus Polymer umfaßt, welcher die Stangen (26) abdeckt, wobei die Stangen in aus komplementären Ausnehmungen (44) aufgenommen sind, welche in einer Seiten (46) des Schaumstoffs zur Abdeckung der Stangen vorgesehen sind.

13. Sitz nach einem der vorangehenden Ansprüche, dadurch gekennzeichnet, daß die Stangen (26) aus einem Material hergestellt sind, das ausgewählt ist aus Kunststoffen, die durch Glas- oder Kohlenstoffasern verstärkt sind, Federstahl und Leichtmetallegierungen.
